# EUROPÄISCHE PATENTSCHRIFT

(11) **EP 3 054 106 B1**
(45) Veröffentlichungstag und Bekanntmachung des Hinweises auf die Patenterteilung: **05.06.2019**
(21) Anmeldenummer: 16153565.3
(22) Anmeldetag: 01.02.2016
(51) Int. Cl.: F01D 11/08, F01D 11/12

(54) **GASTURBINENBAUTEIL**
GAS TURBINE COMPONENT
COMPOSANT DE TURBINE À GAZ

(30) Priorität: 05.02.2015 DE 102015202070
(43) Veröffentlichungstag der Anmeldung: 10.08.2016
(73) Patentinhaber: MTU Aero Engines AG, 80995 München (DE)
(72) Erfinder: Schlothauer, Steffen, 85253 Erdweg (DE); Heß, Thomas, 81541 München (DE); Liebl, Christian, 85461 Bockhorn (DE); Scharl, Richard, 85757 Karlsfeld (DE); Kirchner, Daniel, 80639 München (DE); Buck, Alexander, 80997 München (DE)

(56) Entgegenhaltungen:
- EP-A2- 2 444 515
- WO-A1-2012/122373
- DE-A1-102010 019 958
- US-A1- 2014 147 242

## Beschreibung

Die vorliegende Erfindung betrifft ein Gasturbinenbauteil für eine Gasturbine, eine Gasturbine, insbesondere Flugtriebwerk-Gasturbine, mit dem Gehäuseteil sowie ein Verfahren zum Herstellen bzw. zum Reparieren des Gasturbinenbauteils.

Aus der WO 2012/122373 A1 ist es bekannt, Anstreifbeläge für Laufschaufelenden an einem Gasturbinenbauteil thermisch aufzuspritzen.

Eine Aufgabe einer Ausführung der vorliegenden Erfindung ist es, die Herstellung, den Betrieb und/oder die Reparatur von Gasturbinen zu verbessern.

Diese Aufgabe wird durch ein Gasturbinenbauteil mit den Merkmalen des Anspruchs 1 gelöst. Ansprüche 10, 12 und 13 stellen eine Gasturbine mit einem hier beschriebenen Gehäuseteil bzw. ein Verfahren zum Herstellen bzw. zum Reparieren eines hier beschriebenen Gasturbinenbauteils unter Schutz. Vorteilhafte Ausführungsformen der Erfindung sind Gegenstand der Unteransprüche.

Nach einem Aspekt der vorliegenden Erfindung weist ein Gasturbinenbauteil für eine Gasturbine, insbesondere ein Gasturbinenbauteil einer Gasturbine, einen Mantelbereich auf, der in einer Ausführung ein Laufgitter der Gasturbine in Umfangsrichtung wenigstens teilweise umgibt, insbesondere über 360° umgreift bzw. aufnimmt, bzw. der hierzu vorgesehen bzw. ausgebildet ist.

Die Gasturbine ist in einer Ausführung eine Flugtriebwerk-Gasturbine. Das Laufgitter ist in einer Ausführung ein Laufgitter einer Verdichter- oder Turbinenstufe der Gasturbine. In einer Ausführung weist das Laufgitter mehrere in Umfangsrichtung nebeneinander angeordnete Laufschaufeln auf, die radial außenliegende Laufschaufelenden aufweisen. Die Laufschaufelenden können in einer Ausführung ein Deckband aufweisen. Gleichermaßen können die Laufschaufeln deckbandlos sein. In einer Ausführung weisen die Laufschaufelenden jeweils ein oder mehrere Dichtfinnen auf, die sich radial zu dem Mantelbereich hin erstrecken.

Der das Laufgitter der Gasturbine aufnehmende bzw. hierzu vorgesehene bzw. ausgebildete Mantelbereich ist in einer Ausführung einteilig. Hierdurch kann insbesondere die Festigkeit erhöht und/oder sein Gewicht reduziert werden. In einer anderen Ausführung ist der das Laufgitter der Gasturbine aufnehmende bzw. hierzu vorgesehene bzw. ausgebildete komplette Mantelbereich mehrteilig, insbesondere in Umfangsrichtung segmentiert. Hierdurch kann insbesondere die Herstellung und/oder (De)Montage erleichtert werden. Insofern kann auch ein einzelnes solches Segment bereits ein Mantelbereich im Sinne der vorliegenden Erfindung sein.

Das Gasturbinenbauteil ist in einer Ausführung dauerhaft oder lösbar mit einem Gehäuseteil der Gasturbine verbunden bzw. hierzu vorgesehen bzw. ausgebildet. Es kann insbesondere ein ein- oder mehrteiliger Dichtungsträger sein, der dauerhaft oder lösbar mit einem Gehäuseteil der Gasturbine verbunden wird bzw. ist. In einer anderen Ausführung ist das Gasturbinenbauteil integral bzw. einteilig mit dem Gehäuseteil der Gasturbine ausgebildet. Entsprechend ist in einer Ausführung das Gasturbinenbauteil ein Gehäuseteil der Gasturbine. Das Gehäusebauteil und/oder der Mantelbereich definiert bzw. begrenzt in einer Ausführung einen Strömungskanal der Gasturbine, in der das Laufgitter drehbar angeordnet ist.

Nach einem Aspekt der vorliegenden Erfindung weist der Mantelbereich einen Anstreifbereich zum Einreiben von Laufschaufelenden des Laufgitters auf, der axial beidseitig an einen Umgebungsbereich des Mantelbereichs angrenzt und mit diesem zusammen generativ hergestellt wird bzw. ist.

Hierdurch kann der Anstreifbereich vorteilhaft, insbesondere mit geringerem Aufwand, zur Verfügung gestellt werden. Zusätzlich oder alternativ kann ein zusammen mit seiner Umgebung generativ hergestellter Anstreifbereich vorteilhaft eine höhere Zuverlässigkeit und/oder Lebensdauer aufweisen.

In einer Ausführung ist der Anstreifbereich derart bzw. dazu vorgesehen bzw. eingerichtet, dass sich die Laufschaufelenden im Betrieb, insbesondere bei Inbetriebnahme oder einem bestimmten, insbesondere extremalen, Betriebspunkt bzw. -zustand, in den Anstreifbelag, insbesondere zerstörungsfrei, einreiben, um so eine möglichst exakte Passung, insbesondere Radialdichtung, auszubilden. Mit anderen Worten ist der Anstreifbereich in einer Ausführung dazu vorgesehen, in einem regulären Betrieb einen eingeriebenen Zustand aufzuweisen.

In einer Ausführung weist der Anstreifbereich eine geringere Oberflächenhärte auf als der Umgebungsbereich. In einer Weiterbildung beträgt eine, insbesondere maximale oder mittlere, Härte der laufgitterzugewandten Oberfläche des Anstreifbereichs, insbesondere eine Rockwellhärte HR, insbesondere HRA, HRB oder HRC, eine Brinellhärte HB oder eine Vickershärte HV, höchstens 90%, insbesondere höchstens 75% einer entsprechenden, insbesondere maximale oder mittlere, Härte der laufgitterzugewandten Oberfläche des Umgebungsbereichs, insbesondere eine Rockwellhärte HR, insbesondere HRA, HRB oder HRC, eine Brinellhärte HB oder eine Vickershärte HV. Hierdurch kann das Einreiben der Laufschaufelenden verbessert werden.

In einer Ausführung weist der Anstreifbereich zusätzlich oder alternativ eine geringere Dichte auf als der Umgebungsbereich. In einer Weiterbildung beträgt eine, insbesondere maximale oder mittlere, Dichte des Anstreifbereichs höchstens 90%, insbesondere höchstens 75% einer, insbesondere maximalen oder mittleren, Dichte des Umgebungsbereichs. Hierdurch kann das Einreiben der Laufschaufelenden zusätzlich oder alternativ verbessert werden.

Erfindungsgemäss sind bzw. werden Anstreif- und Umgebungsbereich zusammen generativ hergestellt, indem schichtweise, insbesondere pulverartiges oder flüssiges, Material lokal, insbesondere optisch, thermisch und/oder chemisch, verfestigt und dabei mit einer darunterliegenden Schicht verbunden wird bzw. ist.

Insbesondere eine geringere Härte und/oder Dichte kann in einer Ausführung dadurch erzielt werden, dass der poröse Anstreifbereich eine größere maximale, minimale und/oder mittlere Porengröße aufweist als der Umgebungsbereich. Dieser kann in einer Weiterbildung porenfrei sein, d.h. eine maximale, minimale und mittlere Porengröße von 0 mm aufweisen.

Eine laufgitterzugewandte Oberfläche des Anstreifbereichs weist in einer Ausführung, wenigstens im Wesentlichen, geschlossene Poren auf, was insbesondere strömungstechnisch vorteilhaft sein kann. In einer anderen Ausführung weist eine laufgitterzugewandte Oberfläche des Anstreifbereichs, wenigstens im Wesentlichen, offene Poren auf, was insbesondere herstellungstechnisch vorteilhaft sein kann.

In einer Weiterbildung sind die Poren unregelmäßig verteilt und/oder weisen unterschiedliche Größen auf. Entsprechend ist bzw. wird der Anstreifbereich in einer Ausführung schwammartig generativ zusammen mit dem, insbesondere nicht schwammartigen, sondern massiven, Umgebungsbereich hergestellt. Dies kann insbesondere zum Einreiben vorteilhaft sein.

In einer anderen Weiterbildung sind die Poren regelmäßig angeordnet und/oder weisen, wenigstens im Wesentlichen, dieselbe Größe auf. Dies kann insbesondere zum Herstellen vorteilhaft sein. Eine (un)regelmäßige Verteilung und/oder gleiche bzw. unterschiedliche Porengrößen können durch entsprechende lokale Materialverfestigung bei dem generativen Herstellen erzeugt werden.

Zusätzlich oder alternativ zu einem poröse(re)n Anstreifbereich kann dieser ein zu dem Umgebungsbereich unterschiedliches Material aufweisen, insbesondere, um eine geringere Härte und/oder Dichte zu erzielen. Hierzu sind bzw. werden in einer Ausführung Anstreif- und Umgebungsbereich zusammen generativ hergestellt, indem bereichsweise bzw. im Anstreif- und Umgebungsbereich unterschiedliches Material schichtweise angeordnet und lokal verfestigt und dabei mit einer darunterliegenden Schicht verbunden wird bzw. ist.

In einer Ausführung beträgt ein Radialversatz zwischen laufgitterzugewandten Oberflächen des Anstreifbereichs und des daran axial angrenzenden Umgebungsbereichs höchstens 5 mm, insbesondere höchstens 2 mm, insbesondere höchstens 1 mm. Dies kann insbesondere strömungstechnisch günstig sein.

In einer Ausführung beträgt eine, insbesondere maximale, minimale und/oder mittlere, radiale Wandstärke des Anstreifbereichs von seiner laufgitterzugewandten Oberfläche weg wenigstens 1 mm, insbesondere wenigstens 2 mm, insbesondere wenigstens 5 mm. Zusätzlich oder alternativ beträgt eine, insbesondere maximale, minimale und/oder mittlere, radiale Wandstärke des Anstreifbereichs von seiner laufgitterzugewandten Oberfläche weg in einer Ausführung höchstens 20 mm, insbesondere höchstens 15 mm, insbesondere höchstens 10 mm. Hierdurch kann vorteilhafter ein ausreichend großer und/oder kompakter Anstreifbereich zur Verfügung gestellt werden.

In einer Ausführung weist der Umgebungsbereich einen oder mehrere, insbesondere in Umfangsrichtung, insbesondere äquidistant, verteilte Axialstege auf, die axial in den Anstreifbereich eingreifen, insbesondere den durch die Axialstege segmentierten Anstreifbereich axial durchgreifen. Hierdurch kann der, insbesondere segmentierte, Anstreifbereich vorteilhaft zusätzlich zur Axialrichtung auch in Umfangsrichtung durch den Umgebungsbereich abgestützt sein.

Zusätzlich oder alternativ grenzt der Umgebungsbereich auch radial von außen an den Anstreifbereich an, insbesondere kann der Umgebungsbereich den Anstreifbereich radial außen umgeben bzw. -greifen.

In einer Ausführung übergreift der Anstreifbereich Laufschaufelenden des Laufgitters axial ein- oder beidseitig um wenigstens 1 mm, insbesondere wenigstens 2 mm, und/oder höchstens 10 mm, insbesondere höchstens 5 mm. Mit anderen Worten erstreckt sich der Anstreifbereich in einer Ausführung um wenigstens 1 mm, insbesondere wenigstens 2 mm, und/oder höchstens 10 mm, insbesondere höchstens 5 mm von einer Vorderkante eines Schaufelblattes des Laufgitters bzw. einer Laufschaufel des Laufgitters, stromaufwärts bzw. über diese hinaus von Laufgitter weg. Zusätzlich oder alternativ erstreckt sich der Anstreifbereich in einer Ausführung um wenigstens 1 mm, insbesondere wenigstens 2 mm, und/oder höchstens 10 mm, insbesondere höchstens 5 mm von einer Hinterkante eines Schaufelblattes des Laufgitters bzw. einer Laufschaufel des Laufgitters stromabwärts bzw. über diese hinaus vom Laufgitter weg. Hierdurch kann vorteilhafter ein ausreichend großer und/oder kompakter Anstreifbereich zur Verfügung gestellt werden.

Nach einem Aspekt der vorliegenden Erfindung wird ein hier beschriebenes Gasturbinenbauteil repariert, indem zunächst der eingeriebene Anstreifbereich, insbesondere spanend, abgetragen und ein separat hergestellter Anstreifbelag in der so hergestellten Aussparung befestigt wird. Hierdurch können die hier beschriebenen Vorteile eines generativ zusammen mit dem Umgebungsbereich hergestellten Anstreifbereichs mit der vorteilhaften Reparaturmöglichkeit separat hergestellter Anstreifbeläge kombiniert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Mantelbereichs eines Gasturbinenbauteils einer Gasturbine nach einer Ausführung der vorliegenden Erfindung in einem Schnitt längs der Linie I-I in Fig. 2; und
- Fig. 2: eine Abwicklung eines Teils des Mantelbereichs.

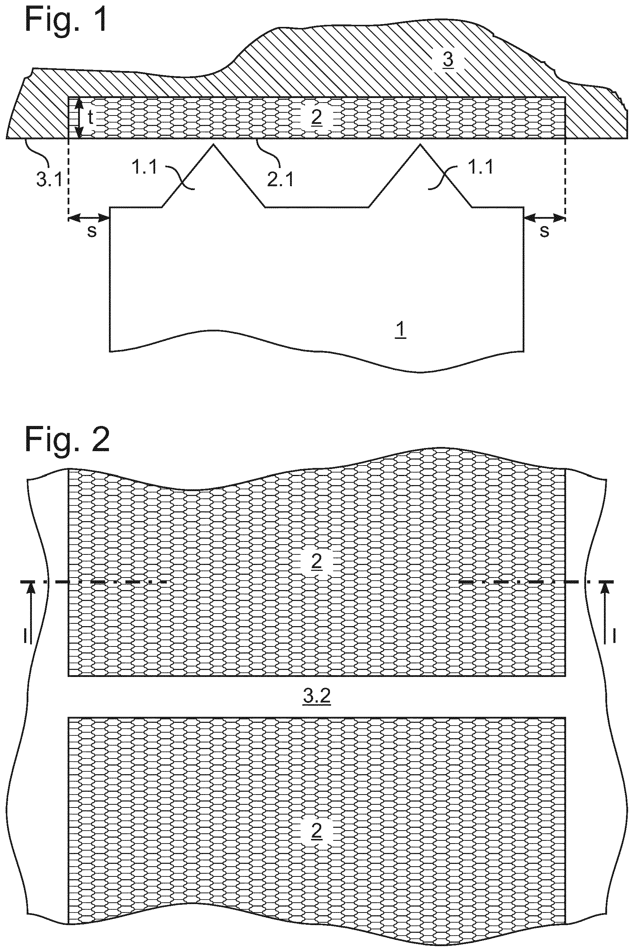

Fig. 2 zeigt eine Abwicklung eines Teils eines Mantelbereichs eines Gasturbinenbauteils einer Gasturbine nach einer Ausführung der vorliegenden Erfindung, Fig. 1 einen Schnitt längs der Linie I-I in Fig. 2.

Der Mantelbereich nimmt ein Laufgitter der Gasturbine auf, von dem in Fig. 1 ein Laufschaufelende 1 dargestellt ist, welches Dichtfinnen 1.1 aufweist, die sich radial zu dem Mantelbereich hin erstrecken.

Das Gasturbinenbauteil kann insbesondere ein Dichtungsträger oder Gehäuseteil der Gasturbine sein.

Der Mantelbereich weist einen Anstreifbereich 2 zum Einreiben der Laufschaufelenden 1 des Laufgitters auf, der axial beidseitig (links, rechts in Fig. 1, 2) an einen Umgebungsbereich 3 des Mantelbereichs angrenzt und mit diesem zusammen generativ hergestellt wird bzw. ist.

Der Anstreifbereich 2 ist dazu vorgesehen, in einem regulären Betrieb einen eingeriebenen Zustand aufzuweisen.

Er weist eine geringere Oberflächenhärte und eine geringere Dichte auf als der Umgebungsbereich 3.

Insbesondere hierzu ist bzw. wird der Anstreifbereich 2 porös bzw, schwammartig generativ zusammen mit dem massiven, Umgebungsbereich 3 hergestellt. Zusätzlich oder alternativ sind bzw. werden der Anstreifbereich 2 und der Umgebungsbereich 3 generativ zusammen, jedoch aus unterschiedlichem Material hergestellt, indem bereichsweise unterschiedliches Material schichtweise angeordnet und lokal verfestigt und dabei mit einer darunterliegenden Schicht verbunden wird bzw. ist.

Die laufgitterzugewandten Oberflächen 2.1, 3.1 von Anstreif- und Umgebungsbereich sind miteinander bündig, so dass ein Radialversatz zwischen diesen etwa 0 mm beträgt.

Eine radiale Wandstärke t des Anstreifbereichs 2 beträgt von seiner laufgitterzugewandten Oberfläche 2.1 weg zwischen 5 mm und 10 mm.

Der Umgebungsbereich 3 weist mehrere in Umfangsrichtung (vertikal in Fig, 2) äquidistant verteilte Axialstege 3.2 auf, die den durch die Axialstege 3.2 segmentierten Anstreifbereich 2 axial (horizontal in Fig. 1, 2) durchgreifen. Zusätzlich grenzt der Umgebungsbereich 3 auch radial (vertikal in Fig. 1) von außen an den Anstreifbereich 2 an, wie in Fig. 1 erkennbar.

Der Anstreifbereich 2 übergreift die Laufschaufelenden 1 des Laufgitters axial beidseitig jeweils um einen Überstand s zwischen 2 mm und 5 mm.

Zur Reparatur wird zunächst der eingeriebene Anstreifbereich 2 spanend abgetragen und ein separat hergestellter Anstreifbelag in der so hergestellten Aussparung befestigt (nicht dargestellt).

Obwohl in der vorhergehenden Beschreibung exemplarische Ausführungen erläutert wurden, sei daraufhingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Laufschaufelende (Laufgitter)
- 2: Anstreifbereich
- 2.1: Oberfläche
- 3: Umgebungsbereich
- 3.1: Oberfläche
- 3.2: Axialsteg
- s: axialer Überstand
- t: Wandstärke

## Patentansprüche

1. Gasturbinenbauteil für eine Gasturbine, das einen Mantelbereich aufweist,
**dadurch gekennzeichnet, dass**
der Mantelbereich einen Anstreifbereich (2) zum Einreiben von Laufschaufelenden (1) eines Laufgitters der Gasturbine aufweist, der axial beidseitig an einen Umgebungsbereich (3) des Mantelbereichs angrenzt und mit diesem zusammen generativ hergestellt ist, indem schichtweise Material lokal verfestigt und dabei mit einer darunterliegenden Schicht verbunden ist.

2. Gasturbinenbauteil nach dem vorhergehenden Anspruch, **dadurch gekennzeichnet, dass** der Anstreifbereich (2) eine geringere Oberflächenhärte aufweist als der Umgebungsbereich (3).

3. Gasturbinenbauteil nach einem der vorhergehenden Ansprüche, **dadurch gekennzeichnet, dass** der Anstreifbereich (2) eine geringere Dichte aufweist als der Umgebungsbereich (3).

4. Gasturbinenbauteil nach einem der vorhergehenden Ansprüche, **dadurch gekennzeichnet, dass** der poröse Anstreifbereich (2) eine größere maximale, minimale und/oder mittlere Porengröße aufweist als der, insbesondere porenfreie, Umgebungsbereich.

5. Gasturbinenbauteil nach einem der vorhergehenden Ansprüche, **dadurch gekennzeichnet, dass** der Anstreifbereich (2) und der Umgebungsbereich (3) unterschiedliches Material aufweisen.

6. Gasturbinenbauteil nach einem der vorhergehenden Ansprüche, **dadurch gekennzeichnet, dass** ein Radialversatz zwischen laufgitterzugewandten Oberflächen (2.1, 3.1) des Anstreifbereichs (2) und des daran axial angrenzenden Umgebungsbereichs (3) höchstens 5 mm beträgt.

7. Gasturbinenbauteil nach einem der vorhergehenden Ansprüche, **dadurch gekennzeichnet, dass** eine radiale Wandstärke (t) des Anstreifbereichs (2) wenigstens 1 mm und/oder höchstens 20 mm beträgt.

8. Gasturbinenbauteil nach einem der vorhergehenden Ansprüche, **dadurch gekennzeichnet, dass** der Umgebungsbereich (3) Axialstege (3.2) aufweist, die axial in den Anstreifbereich (2) eingreifen, insbesondere den durch die Axialstege (3.2) segmentierten Anstreifbereich (2) axial durchgreifen.

9. Gasturbinenbauteil nach einem der vorhergehenden Ansprüche, **dadurch gekennzeichnet, dass** der Mantelbereich ein- oder mehrteilig ausgebildet ist.

10. Gasturbine, insbesondere Flugtriebwerk-Gasturbine, mit einem Gehäuseteil, in dem ein Laufgitter drehbar angeordnet ist, und einem Gasturbinenbauteil nach einem der vorhergehenden Ansprüche, dessen Mantelbereich das Laufgitter aufnimmt und das mit dem Gehäuseteil verbunden oder integral ausgebildet ist.

11. Gasturbine nach dem vorhergehenden Anspruch, **dadurch gekennzeichnet, dass** der Anstreifbereich (2) Laufschaufelenden (1) des Laufgitters axial ein- oder beidseitig um wenigstens 1 mm und/oder höchstens 10 mm übergreift.

12. Verfahren zum Herstellen eines Gasturbinenbauteils nach einem der vorhergehenden Ansprüche, **dadurch gekennzeichnet, dass** der Anstreifbereich (2) zusammen mit dem Umgebungsbereich (3) generativ hergestellt wird, indem schichtweise Material lokal verfestigt und dabei mit einer darunterliegenden Schicht verbunden wird.

13. Verfahren zum Reparieren eines Gasturbinenbauteils nach einem der vorhergehenden Ansprüche, **dadurch gekennzeichnet, dass** der eingeriebene Anstreifbereich (2), insbesondere spanend, abgetragen und ein separat hergestellter Anstreifbelag in der so hergestellten Aussparung befestigt wird.

## Claims

1. Gas turbine component for a gas turbine, comprising a shell region, **characterized in that** the shell region has an abradable region (2) for rubbing in rotor blade ends (1) of a rotor cascade of the gas turbine, which region axially adjoins a surrounding region (3) of the shell region on both sides and is additively manufactured together therewith by material being locally solidified layer by layer and in so doing being connected to an underlying layer.

2. Gas turbine component according to the preceding claim, **characterized in that** the abradable region (2) has a lower surface hardness than the surrounding region (3).

3. Gas turbine component according to either of the preceding claims, **characterized in that** the abradable region (2) has a lower density than the surrounding region (3).

4. Gas turbine component according to any of the preceding claims, **characterized in that** the porous abradable region (2) has a larger maximum, minimum and/or average pore size than the surrounding region, which is in particular pore-free.

5. Gas turbine component according to any of the preceding claims, **characterized in that** the abradable region (2) and the surrounding region (3) comprise different material.

6. Gas turbine component according to any of the preceding claims, **characterized in that** a radial offset between surfaces (2.1, 3.1), which face the rotor cascade, of the abradable region (2) and of the surrounding region (3) axially adjacent thereto is at most 5 mm.

7. Gas turbine component according to any of the preceding claims, **characterized in that** a radial wall thickness (t) of the abradable region (2) is at least 1 mm and/or at most 20 mm.

8. Gas turbine component according to any of the preceding claims, **characterized in that** the surrounding region (3) has axial connecting pieces (3.2) which axially engage in the abradable region (2), in particular axially engage through the abradable region (2) segmented by the axial connecting pieces (3.2).

9. Gas turbine component according to any of the preceding claims, **characterized in that** the shell region is formed in one or multiple parts.

10. Gas turbine, in particular an aircraft engine gas turbine, having a housing part in which a rotor cascade is rotatably arranged, and a gas turbine component according to any of the preceding claims, the shell region of which accommodates the rotor cascade and which is connected to or integrally formed with the housing part.

11. Gas turbine according to the preceding claim, **characterized in that** the abradable region (2) axially overlaps rotor blade ends (1) of the rotor cascade on one or both sides by at least 1 mm and/or at most 10 mm.

12. Method for producing a gas turbine component according to any of the preceding claims, **characterized in that** the abradable region (2) is additively manufactured together with the surrounding region (3) by material being locally solidified layer by layer and in so doing being connected to an underlying layer.

13. Method for repairing a gas turbine component according to any of the preceding claims, **characterized in that** the rubbed-in abradable region (2) is removed, in particular by machining, and a separately produced abradable coating is secured in the recess thus produced.

## Revendications

1. Composant de turbine à gaz pour une turbine à gaz, lequel composant présente une zone de coque, **caractérisé en ce que** la zone de coque présente une zone de frottement (2) pour frotter les extrémités d'aubes (1) d'une grille de canaux de la turbine à gaz, qui est axialement adjacente des deux côtés à une zone périphérique (3) de la zone de coque et est produite de façon générative avec celle-ci, **en ce que** le matériau en couche est solidifié localement et ainsi relié à une couche sous-jacente.

2. Composant de turbine à gaz selon la revendication précédente, **caractérisé en ce que** la zone de frottement (2) présente une dureté de surface inférieure à celle de la zone périphérique (3).

3. Composant de turbine à gaz selon l'une des revendications précédentes, **caractérisé en ce que** la zone de frottement (2) présente une épaisseur inférieure à celle de la zone périphérique (3).

4. Composant de turbine à gaz selon l'une des revendications précédentes, **caractérisé en ce que** la surface de frottement (2) poreuse présente une taille de pore maximale, minimale et/ou moyenne plus grande que la surface environnante, en particulier la surface sans pores.

5. Composant de turbine à gaz selon l'une des revendications précédentes, **caractérisé en ce que** la zone de frottement (2) et la zone périphérique (3) présentent un matériau différent.

6. Composant de turbine à gaz selon l'une des revendications précédentes, **caractérisé en ce qu'**un décalage radial entre les surfaces (2.1, 3.1) de la zone de frottement (2) tournées vers la grille de roulement et la zone périphérique (3) axialement adjacente à celle-ci est au maximum de 5 mm.

7. Composant de turbine à gaz selon l'une des revendications précédentes, **caractérisé en ce qu'**une épaisseur de paroi radiale (t) de la zone de frottement (2) est d'au moins 1 mm et/ou au plus 20 mm.

8. Composant de turbine à gaz selon l'une des revendications précédentes, **caractérisé en ce que** la zone environnante (3) présente des nervures axiales (3.2) qui s'engagent axialement dans la zone de frottement (2), en particulier axialement à travers la zone de frottement (2) segmentée par les nervures axiales (3.2).

9. Composant de turbine à gaz selon l'une des revendications précédentes, **caractérisé en ce que** la zone de coque est formée d'une ou de plusieurs partie(s).

10. Turbine à gaz, en particulier turbine à gaz de moteur d'avion, comportant une partie de boîtier dans laquelle est disposée une grille de roulement en rotation, et un composant de turbine à gaz selon l'une des revendications précédentes, dont la zone de coque reçoit la grille de roulement et qui est relié à la partie de boîtier ou est formée intégralement.

11. Turbine à gaz selon la revendication précédente, **caractérisée en ce que** la zone de frottement (2) des extrémités d'aube de rotor (1) de la grille de rotor s'engage axialement sur un côté ou sur les deux côtés d'au moins 1 mm et/ou au plus 10 mm.

12. Procédé de fabrication d'un composant de turbine à gaz selon l'une des revendications précédentes, **caractérisé en ce que** la zone de frottement (2) est fabriquée de façon générative avec la zone environnante (3), dans un processus où le matériau est fixé localement par couche et, de ce fait, lié à une couche sous-jacente.

13. Procédé de réparation d'un composant de turbine à gaz selon l'une des revendications précédentes, **caractérisé en ce que** la zone de frottement (2), notamment un revêtement de frottement par tension, élimée et fabriquée de façon distincte est fixée dans l'évidement ainsi réalisé.
